# FASCICULE DE BREVET EUROPEEN

(11) **EP 2 516 242 B1**
(45) Date de publication et mention de la délivrance du brevet: **12.02.2014**
(21) Numéro de dépôt: 10807452.7
(22) Date de dépôt: 01.12.2010
(51) Int. Cl.: B62D 25/06, B60J 7/00

(54) **PIECE DE STRUCTURE**
BAUTEIL
STRUCTURAL PART

(30) Priorité: 22.12.2009 FR 0959439
(43) Date de publication de la demande: 31.10.2012
(73) Titulaire: Peugeot Citroën Automobiles SA, 78140 Vélizy Villacoublay (FR)
(72) Inventeur: BOUCHY, Laurent, F-91590 Baulne (FR)
(74) Mandataire: Fernandez, Francis Lionel
(86) Numéro de dépôt international: PCT/FR2010/052589
(87) Numéro de publication internationale: WO 2011/083221

(56) Documents cités:
- EP-A1- 1 721 769
- FR-A1- 2 873 648
- JP-A- 2008 168 778

## Description

La présente invention concerne une pièce de structure pour un pavillon d'un véhicule automobile, une structure de toit comprenant de telles pièces de structure, un toit panoramique avec de telles pièces de structure, ainsi qu'un véhicule automobile comprenant un tel toit panoramique.

Le document FR 2873648 A1 montre une pièce de structure selon la préambule de la revendication 1.

De nombreux véhicules automobiles sont équipés d'un toit en verre panoramique. Un toit transparent apporte de la clarté à l'habitacle, offre aux passagers une vision verticale et augmente ainsi la notion d'espace. Le toit transparent peut être ouvrant ou fixe.

Cependant, lorsqu'un véhicule automobile est équipé d'un toit transparent, il présente aux rayons de soleil un passage supplémentaire pour pénétrer à l'intérieur de l'habitacle et pour le chauffer. En conséquence, la plupart des véhicules ayant un toit transparent sont équipés aussi d'un rideau ou store permettant d'occulter ce passage de lumière.

Alors que le panneau transparent est fixé sur la carrosserie par collage comme le pare-brise ou la lunette arrière, le store doit être monté mobile afin de pouvoir être déplacé entre une position d'occultation et une position ouverte. A cet effet, le store (ou de manière analogue un rideau) est monté coulissant dans deux rails opposés constituant la partie visible du module d'occultation. Les deux rails sont montés respectivement du côté droit et du côté gauche du panneau transparent sur la structure de toit de l'habitacle. Afin que les deux rails du module d'occultation ne soient pas visibles de l'extérieur, le panneau transparent est pourvu d'une sérigraphie rendant une zone de bord opaque le long des quatre bords du panneau.

Pour obtenir un montage compact du module d'occultation et du panneau transparent aux bords de l'ouverture formée dans le pavillon, la structure du véhicule comprend deux pièces de structure disposées à droite et à gauche de l'ouverture, chacune de ces pièces étant formées à la fois pour assurer la fonction de surface pour recevoir le cordon de colle du panneau transparent et pour former une partie technique qui rassemble les moyens de fixation du module d'occultation.

Dans le cadre de la présente description, des indications de direction et de côté, tel que avant, arrière, droite, gauche, vertical, se réfèrent à un véhicule automobile en position de marche et par rapport à la direction de la marche avant du véhicule.

Les toits des véhicules automobiles et notamment des véhicules dits de tourisme étant généralement galbés et plus large à l'avant qu'à l'arrière, le clair de baie, c'est-à-dire la largeur de la zone effectivement transparente du panneau de toit, est fortement limitée en raison du besoin d'une zone opaque large pour couvrir la partie technique du montage du store.

En effet, plus l'on se déplace de l'avant vers l'arrière du véhicule, plus le galbe de la structure de toit s'approche de la zone de clair de baie, car le module d'occultation est nécessairement rectiligne et ne peut donc pas suivre le galbe du pavillon. La structure est alors à dimensionner pour permettre de réaliser une double fonction de fixation, c'est-à-dire la fixation du panneau transparent et celle des rails du module d'occultation, et cela par rapport à la zone la moins large entre le galbe du pavillon et le clair de baie du panneau transparent. Il en découle donc une contrainte de conception.

Le but de l'invention est de remédier à cette contrainte.

Le but de l'invention est atteint avec une pièce de structure pour un pavillon d'un véhicule automobile, la pièce ayant au moins deux parties de fixation s'étendant à des niveaux différents, à savoir une première partie s'étendant à un niveau supérieur pour la fixation d'un panneau transparent dans une zone de clair de baie et une seconde partie s'étendant à un niveau inférieur pour la fixation d'un module d'occultation d'un store.

Selon la présente invention, les première et seconde parties sont disposées, vu de dessus, côte à côte sur une première longueur de la pièce de structure et en recouvrement au moins partiel sur une seconde longueur de la pièce de structure.

Selon des caractéristiques supplémentaires de l'invention,
- sur la seconde longueur de la pièce de structure, la seconde partie comprend un élément de support rapporté à la pièce de structure pour la fixation du module d'occultation ; et
- la première partie comprend une face d'appui pour recevoir un cordon de colle fixant le panneau transparent et la seconde partie est adaptée pour recevoir un moyen de fixation du module d'occultation.

Le but de l'invention est également atteint avec une structure de toit pour un véhicule automobile ayant un pavillon, la structure comprenant deux pièces de structure telles que décrites ci avant et disposées symétriquement par rapport à un plan médian vertical du véhicule.

Le but de l'invention est aussi atteint avec un toit panoramique d'un véhicule automobile, comprenant un panneau transparent dans une zone de clair de baie et fixé sur une structure de toit ayant deux pièces de structure latérales, un store pour occulter la zone de clair de baie du panneau et deux rails du module d'occultation par lesquels le store est guidé longitudinalement entre une position ouverte et une position fermée, chacune des deux pièces de structure ayant au moins deux parties s'étendant à des niveaux différents, une première partie s'étendant à un niveau supérieur pour la fixation du panneau et une seconde partie s'étendant à un niveau inférieur pour la fixation du module d'occultation.

Selon la présente invention, les première et seconde parties de chaque pièce de structure sont disposées, vu de dessus, côte à côte sur une première longueur de la pièce de structure et en recouvrement au moins partiel sur une seconde longueur de la pièce de structure.

Le toit panoramique de l'invention peut également avoir l'une au moins des caractéristiques ci-après, considérées isolément ou selon toute combinaison possible :
- la première et la seconde parties sont disposées côte à côte sur une première longueur de la pièce de structure de part et d'autre d'une partie avant de la zone de clair de baie et en recouvrement au moins partiel sur une seconde longueur de part et d'autre d'une partie arrière de la zone de clair de baie ;
- sur la seconde longueur de chaque pièce de structure, la seconde partie comprend un élément de support rapporté à la pièce de structure pour la fixation du module d'occultation correspondant ;
- la première partie de chaque pièce de structure comprend une face d'appui pour recevoir un cordon de colle fixant le panneau transparent et la seconde partie de chaque pièce de structure est adaptée pour recevoir un moyen de fixation du module d'occultation correspondant ;
- le panneau transparent comprend une zone opaque entourant la zone de clair de baie et définissant le clair de baie du panneau, les deux pièces de structure et les deux rails du module d'occultation étant espacés les uns des autres d'une distance égale au clair de baie.

Le but de l'invention est atteint de même avec un véhicule automobile comprenant un toit panoramique avec des pièces de structure décrites plus haut.

D'autres caractéristiques et avantages de la présente invention ressortiront de la description ci-après d'un mode de réalisation de l'invention. La description est faite en référence aux dessins sur lesquels :
- la figure 1 représente une vue en perspective de l'intérieur de l'habitacle d'un véhicule automobile avec un toit transparent et un store pour l'occulter,
- la figure 2 représente une vue de dessus du toit transparent de la figure 1,
- les figures 3 et 4 représentent, sous la forme de vues en perspective coupées le long de lignes de coupe indiquées sur la figure 2, respectivement l'avant et l'arrière de la structure et du panneau en verre d'un toit transparent selon l'invention et
- les figures 5 et 6 représentent cette structure et le panneau de verre sous la forme de coupes simplifiées le long des lignes de coupe indiquées sur la figure 3.

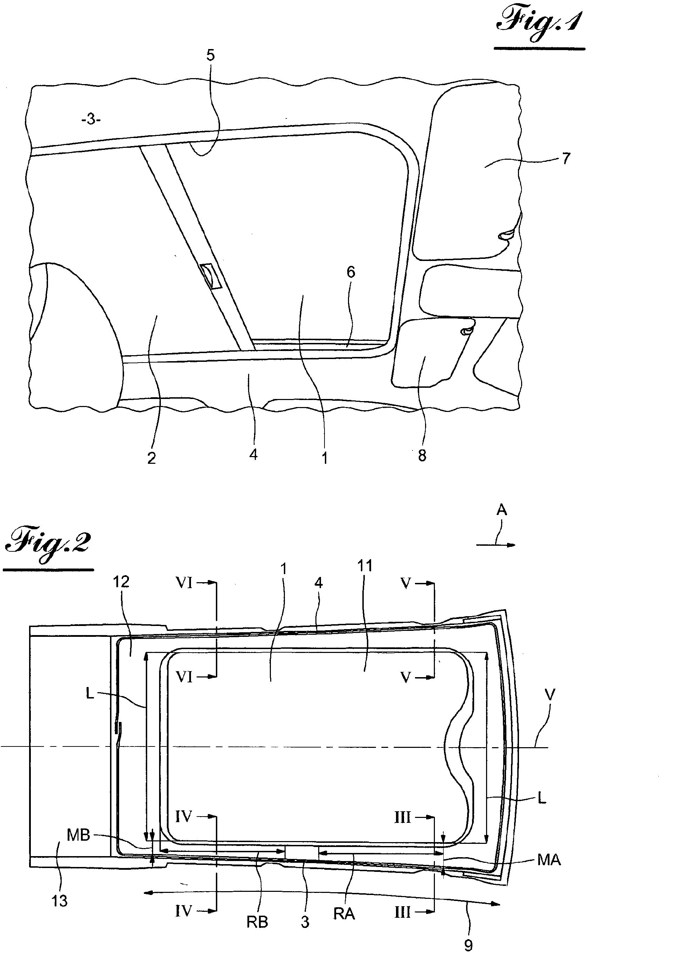

La figure 1 représente en une vue en perspective l'intérieur de l'habitacle d'un véhicule automobile avec vue sur un toit transparent, notamment d'aspect galbé, comprenant un panneau en verre 1 et un store 2 pour l'occulter. Le toit transparent s'étend entre une pièce de structure 3 et une pièce de structure 4 espacées l'une de l'autre et disposées symétriquement par rapport à un axe longitudinal V du véhicule (voir figure 2). Le store 2 est monté coulissant dans des rainures de rails 5, 6 du module d'occultation recouverts, comme les pièces de structure 3, 4, par l'habillage de l'habitacle. Le store 2 est représenté en position mi-ouverte. En effet, comme cela est reconnaissable grâce à des pare-soleil 7, 8, le store 2 est monté à l'arrière du pavillon et est déroulé vers l'avant pour occulter le toit transparent 1. En position ouverte, le store 2 est enroulé à l'arrière du pavillon.

La figure 2 représente d'une manière schématique la conception du toit transparent dont les côtés latéraux présentent chacun un aspect galbé. Comme la flèche A l'indique, l'avant du toit est orienté vers la droite de la figure 2 qui ne montre que la disposition des pièces de structure 3, 4, des rails 5, 6 du module d'occultation et du panneau transparent 1 par rapport à l'axe V du véhicule. Le panneau transparent 1 comprend une zone de clair de baie 11 ayant un clair de baie L. Le clair de baie L est donc la largeur du verre visible par rapport à la garniture intérieure du toit transparent.

La figure 2 représente le galbe du pavillon par une ligne courbe 9, appelée ligne de style, du côté de la pièce de structure droite 3. On voit ainsi que le pavillon du véhicule automobile est plus large à l'avant qu'à l'arrière et que, par conséquence, la pièce de structure 3, comme de manière symétrique la pièce de structure 4, est plus proche de la zone de clair de baie 11 à l'arrière du toit transparent qu'à l'avant. La distance entre la pièce de structure 3 et la limite de la zone du clair de baie 11 est référencée MA à l'avant et MB à l'arrière du toit transparent.

La figure 2 représente en outre une zone de verre 12 entourant la zone de clair de baie 11, ainsi qu'une partie arrière 13 du pavillon qui n'est pas pourvue de panneau transparent. Les zones 12 ont été rendues opaque par sérigraphie.

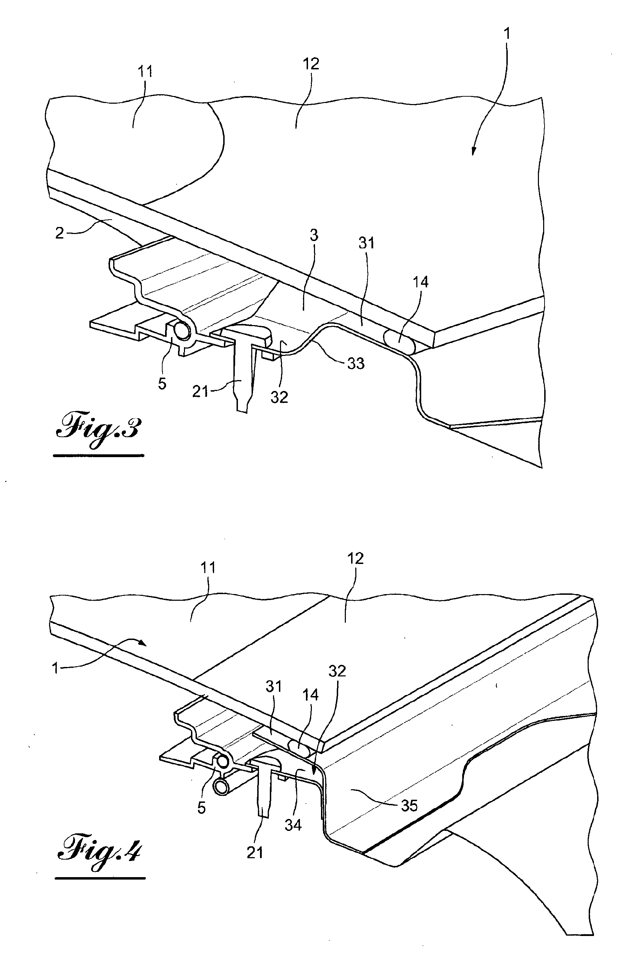

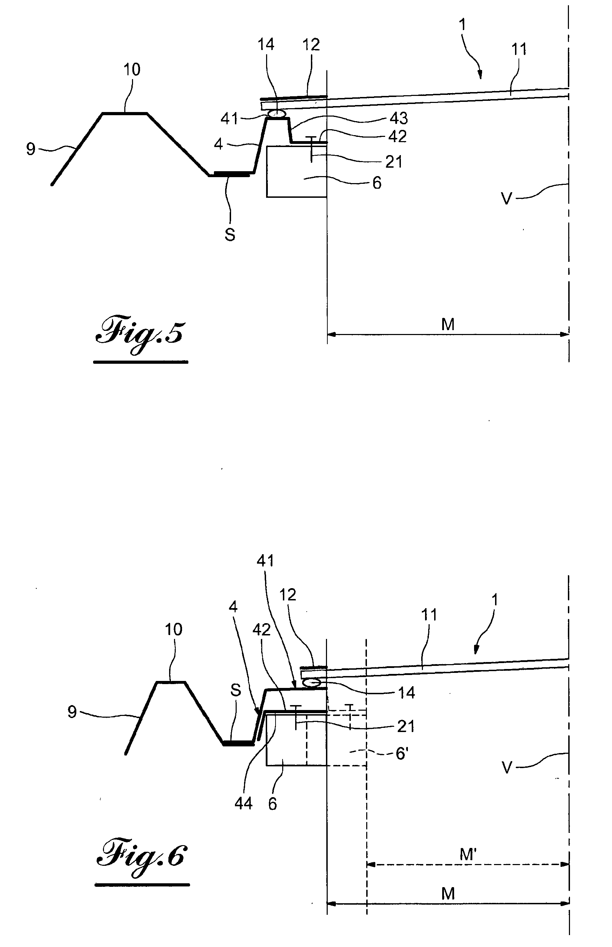

La figure 2 indique également des lignes de coupe III-III et V-V de vues en coupe représentées respectivement sur les figures 3 et 5 pour l'avant du pavillon et des lignes de coupe IV-IV et VI-VI de vues en coupe représentées respectivement sur les figures 4 et 6 pour l'arrière du pavillon.

La figure 3 représente la pièce de structure droite 3 et le panneau en verre 1 en une vue en perspective coupée suivant la ligne de coupe transversale III-III indiquée sur la figure 2.

On voit sur la figure 3 plus particulièrement le panneau transparent 1 avec la zone de clair de baie 11 et la zone opaque 12, un cordon de colle 14 avec lequel le panneau est fixé sur la pièce de structure 3, le rail 5 du module d'occultation sur lequel le store d'occultation 2 est monté à coulissement. Le store 2 est partiellement visible à travers la zone 11 et partiellement en dessous du panneau 1. On y voit également un moyen de fixation 21 par lequel le rail 5 du module d'occultation est fixé sur la pièce de structure 3.

La pièce de structure 3 comprend une première partie 31 s'étendant à un niveau supérieur par rapport à une seconde partie 32 de la pièce de structure 3. Cette première partie constitue une surface d'appui pour le cordon de colle 14 et, avec celui-ci, pour le panneau de verre 1. La seconde partie 32 de la pièce de structure 3 s'étend à un niveau inférieur par rapport à la première partie 31 et est destinée à la fixation du rail 5 du module d'occultation qui guide le store d'occultation 2. La première partie 31 et la seconde partie 32 de la pièce de structure 3 sont reliées entre elles par une partie de liaison 33 présentant à cet endroit de coupe une pente moyenne de moins de 45° par rapport la verticale. En conséquence, lorsque l'on regarde cette disposition en projection sur le dessus de la pièce de structure 3, la première et la seconde parties 31, 32 sont disposées, de part et d'autre d'une partie avant de la zone de clair de baie 11, côte à côte sur une première longueur RA de la pièce de structure 3. Au fur et à mesure que l'on se déplace sur la pièce dé structure vers l'arrière du toit transparent, la ligne de style 9, et avec elle la pièce de structure 3, s'approche de la zone de clair de baie 11. Le module d'occultation 5 étant nécessairement orienté suivant le bord rectiligne de la zone de clair de baie 11, les première et seconde parties 31, 32 s'approchent de plus en plus, vue en projection de dessus, et finissent par venir, sur une seconde longueur RB de la pièce de structure 3, en recouvrement d'abord partiel puis entier de part et d'autre d'une partie arrière de la zone de clair de baie 11. La situation de recouvrement entier est représentée sur la figure 4.

Dans cette situation, la première partie 31 recevant le cordon de colle 14 se retrouve alors au-dessus de la seconde partie 32.

Afin de pouvoir obtenir une pièce de structure 3 mécaniquement stable et aussi économiquement réalisable, la seconde partie 32 venant de matière avec la première partie 31 et la partie de liaison 33 sont remplacées par un élément de support rapporté 34 que l'on voit sur la figure 4.

L'élément de support rapporté 34, qui est de longueur RB, est fixé sur une prolongation sensiblement verticale 35 de la première partie 31 par soudage.

De cette manière, la pièce de structure 3 est conformée pour remplir aussi bien à l'avant qu'à l'arrière la double fonction de support pour le panneau transparent 1 et pour la fixation du module d'occultation 5.

Les figures 5 et 6 représentent les dispositions concernant les pièces de structure et les modules d'occultation décrites ci-avant en référence aux figures 3 et 4, sous la forme de vues en coupe transversales simplifiées et notamment disposées l'une au-dessus de l'autre avec, pour référence de comparaison, l'axe longitudinal V du véhicule.

La figure 5 représente la disposition de la pièce de structure gauche 4 et du module d'occultation gauche 6 par rapport au panneau transparent 1 à l'avant du pavillon. La référence M désigne la moitié du clair de baie L du panneau 1.

La figure 5 représente en outre la zone opaque 12. La largeur de la zone 12 est déterminée à l'avant du pavillon de façon à recouvrir à la fois la première partie 41 et la seconde partie 43 de la pièce de structure 4, c'est-à-dire la partie recevant le cordon de colle 14 et la partie servant à la fixation du rail 6 du module d'occultation, lorsqu'elles sont disposées côte à côte.

On voit également sur la figure 5 que le module d'occultation 6, de largeur x, occupe la place entière en-dessous de la pièce de structure 4. La figure 5 représente, à la différence de la figure 3, aussi le côté de caisse 10 relié à la pièce de structure 4 par une soudure S et s'étendant jusqu'à la ligne de style galbée 9.

La figure 6 représente la disposition de la pièce de structure gauche 4 et du rail 6 du module d'occultation par rapport au panneau transparent 1 à l'arrière du pavillon, de manière comparable à la représentation de la figure 5. C'est ainsi que l'on peut observer plus aisément les conséquences de la largeur réduite du pavillon à l'arrière par rapport à la largeur à l'avant.

En effet, selon la disposition dessinée en traits pleins des différents éléments, la largeur de la zone opaque 12 du panneau 1 est nettement inférieure à la largeur du rail 6 du module d'occultation. Afin de pouvoir maintenir constante la largeur de la zone de clair de baie 11 de l'avant jusqu'à l'arrière du panneau 1, le rail 6 du module d'occultation doit être positionné à l'arrière du panneau 1 en débordement du bord gauche du panneau. De plus, comme déjà indiqué plus haut, la première partie 41 de la pièce de structure 4 se trouve au-dessus de la seconde partie formée ici par un élément de support rapporté 44.

A titre de comparaison, la figure 6 représente en traits interrompus la position (référencée en 6') que le rail 6 du module d'occultation et la seconde partie de la pièce de structure 4 auraient si la pièce de structure 4 avait à l'arrière du panneau 1 la même configuration qu'à l'avant.

En effet, si la pièce de structure 4 était entièrement réalisée en une seule pièce et si elle avait donc la même section transversale à l'arrière qu'à l'avant, la pièce de structure 4 et le rail 6 du module d'occultation se trouveraient plus proche de l'axe V du véhicule. Il en résulterait pour le panneau 1 un clair de baie moins grand à l'arrière qu'à l'avant, comme cela est indiqué sur le dessin par le demi clair de baie M'.

Toutefois, puisque la largeur du store est nécessairement constante sur toute sa longueur, un clair de baie s'amenuisant de l'avant à l'arrière ferait apparaître de l'intérieur la zone opaque 12 et donnerait ainsi un toit transparent peu esthétique, voire d'aspect gênant.

L'invention limite l'impact du style sur le clair de baie et permet au contraire au galbe du style de se rapprocher de l'axe du véhicule sans altérer le clair de baie du panneau transparent 1. En effet, conserver le clair de baie du toit transparent constitue un critère important de vente.

Comme la figure 6 le montre également, les dispositions de l'invention ne posent aucun problème au collage du panneau transparent 1, puisque la forme précise de la première partie 41 peut être adaptée facilement au changement de distance du cordon de colle 14 par rapport à l'axe V du véhicule.

De plus, par la solution que la présente invention propose, à savoir former la seconde partie comme une pièce rapportée fixée sur la pièce de structure 4 par exemple par soudage, la pièce de structure 4 réussit à l'arrière comme à l'avant de remplir la double fonction de pièce de support pour le panneau transparent 1 et pour le module d'occultation 6.

L'élément de support rapporté 44 se situe uniquement dans une zone où la pièce de structure ne permettrait plus autrement d'assurer les deux fonctions qui lui sont demandées, à savoir recevoir le cordon de colle 14 ainsi que les moyens de fixation du module d'occultation 6. L'élément rapporté prenant le relais de la seconde partie formée de matière avec la première partie de la pièce de structure uniquement sur une longueur réduite au juste nécessaire, le prix de revient de fabrication de l'ensemble reste modéré.

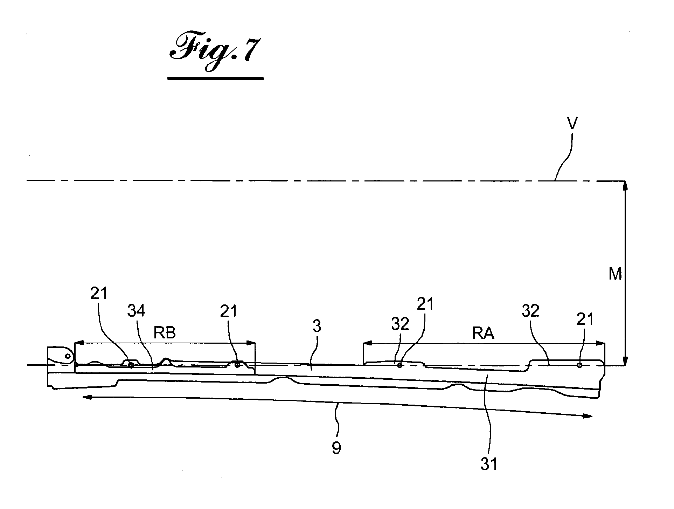

La figure 7 représente la pièce de structure droite 3 en une vue de dessus montrant plus particulièrement l'alignement des points de fixation 21 du module d'occultation, situés sur la ligne dessinée en traits interrompus, et la forme courbe de la pièce de structure 3 et notamment de la première partie 31, en suivant le galbe de la ligne de style 9.

Selon l'exemple représenté sur la figure 7, l'élément rapporté 34 reçoit deux des quatre fixations du module d'occultation 5.

## Revendications

1. Pièce de structure pour un pavillon d'un véhicule notamment automobile, la pièce (3 ; 4) ayant au moins deux parties s'étendant à des niveaux différents, à savoir une première partie (31 ; 41) s'étendant à un niveau supérieur pour la fixation d'un panneau (1) transparent dans une zone de clair de baie (11) et une seconde partie (32 ; 42) s'étendant à un niveau inférieur pour la fixation d'un module d'occultation comportant un store (2),
**caractérisée en ce que** la première et la seconde parties (31, 41 ; 32, 42) sont disposées, vu de dessus, côte à côte sur une première longueur (RA) de la pièce de structure (3, 4) et en recouvrement au moins partiel sur une seconde longueur (RB) de la pièce de structure.

2. Pièce de structure selon la revendication 1, **caractérisée en ce que**, sur la seconde longueur (RB) de la pièce de structure (3, 4), la seconde partie comprend un élément de support (34 ; 44) rapporté à la pièce de structure pour la fixation du module d'occultation.

3. Pièce de structure selon la revendication 1 ou 2, **caractérisée en ce que** la première partie (31 ; 41) comprend une face d'appui pour recevoir un cordon de colle (14) fixant le panneau transparent (1) et **en ce que** la seconde partie (32 ; 42) est adaptée pour recevoir un moyen de fixation (21) du module d'occultation.

4. Structure de toit pour un véhicule automobile ayant un pavillon, **caractérisée en ce qu'**elle comprend deux pièces de structure (3, 4) selon l'une quelconque des revendications 1 à 3, les pièces de structures étant disposées symétriquement par rapport à un plan médian vertical passant par un axe longitudinal (V) du véhicule.

5. Toit panoramique d'un véhicule automobile, comprenant un panneau (1) transparent dans une zone de clair de baie (11) et qui est fixé sur une structure de toit ayant deux pièces de structure latérales (3, 4) selon la revendication 1, un store (2) pour occulter la zone de clair de baie (11) du panneau (1) et deux rails (5, 6) du module d'occultation par lesquels le store est guidé longitudinalement entre une position ouverte et une position fermée,
chacune des deux pièces de structure (3, 4) ayant au moins deux parties s'étendant à des niveaux différents, une première partie (31 ; 41) s'étendant à un niveau supérieur pour la fixation du panneau (1) et une seconde partie (32 ; 42) s'étendant à un niveau inférieur pour la fixation des rails (5, 6) du module d'occultation,
**caractérisé en ce que** la première et la seconde parties (31, 32) de chaque pièce de structure (3) sont disposées, vu de dessus, côte à côte sur une première longueur (RA) de la pièce de structure et en recouvrement au moins partiel sur une seconde longueur (RB) de la pièce de structure.

6. Toit panoramique selon la revendication 5, **caractérisée en ce que** la première et la seconde parties (31, 32) sont disposées côte à côte sur une première longueur (RA) de la pièce de structure de part et d'autre d'une partie avant de la zone de clair de baie (11) et en recouvrement au moins partiel sur une seconde longueur (RB) de part et d'autre d'une partie arrière de la zone de clair de baie (11).

7. Toit panoramique selon la revendication 5 ou 6, **caractérisée en ce que**, sur la seconde longueur (RB) de chaque pièce de structure, la seconde partie comprend un élément de support (34 ; 44) rapporté à la pièce de structure pour la fixation du module d'occultation (5, 6) correspondant.

8. Toit panoramique selon l'une quelconque des revendications 5 à 7, **caractérisée en ce que** la première partie (31 ; 41) de chaque pièce de structure comprend une face d'appui pour recevoir un cordon de colle (14) fixant le panneau transparent (1) et **en ce que** la seconde partie (32 ; 42) de chaque pièce de structure est adaptée pour recevoir un moyen de fixation (21) du module d'occultation (5, 6) correspondant.

9. Toit panoramique selon l'une quelconque des revendications 5 à 8, **caractérisée en ce que** le panneau (1) comprend une zone opaque (12) entourant la zone transparente (11) et définissant le clair de baie (L) du panneau (1), les deux pièces de structure (3, 4) et les deux rails (5, 6) du module d'occultation étant espacés les uns des autres d'une distance égale au clair de baie (L).

10. Véhicule automobile, **caractérisé en ce qu'**il comprend un toit panoramique selon l'une quelconque des revendications 5 à 9.

## Patentansprüche

1. Strukturteil für ein Dach eines Fahrzeugs, vor allem eines Kraftfahrzeugs, wobei das Teil (3; 4) zumindest zwei Abschnitte aufweist, die sich über unterschiedliche Niveaus erstrecken, nämlich einen ersten Abschnitt (31; 41), der sich über ein oberes Niveau zur Befestigung einer transparenten Platte (1) im Bereich einer lichten Öffnungsfläche (11) erstreckt, und einen zweiten Abschnitt (32; 42), der sich über ein unteres Niveau zur Befestigung eines Abdeckmoduls erstreckt, das ein Rollo (2) umfasst,
**dadurch gekennzeichnet, dass** der erste und der zweite Abschnitt (31, 41; 32, 42) von oben gesehen Seite an Seite auf einer ersten Länge (RA) des Strukturteils (3, 4) und zumindest in einer Teilüberdeckung auf einer zweiten Länge (RB) des Strukturteils angeordnet sind.

2. Strukturteil nach Anspruch 1, **dadurch gekennzeichnet, dass** der zweite Abschnitt auf der zweiten Länge (RB) des Strukturteils (3, 4) ein Halteelement (34; 44) umfasst, das zur Befestigung des Abdeckmoduls zum Strukturteil hinzugefügt wird.

3. Strukturteil nach Anspruch 1 oder 2, **dadurch gekennzeichnet, dass** der erste Abschnitt (31; 41) eine Auflagefläche zum Aufbringen einer Kleberwulst (14) zum Fixieren der transparenten Platte (1) umfasst, und dadurch, dass der zweite Abschnitt (32; 42) geeignet ist, um eine Vorrichtung zur Befestigung (21) des Abdeckmoduls aufzunehmen.

4. Dachstruktur für ein Kraftfahrzeug mit einem Dach, **dadurch gekennzeichnet, dass** sie zwei Strukturteile (3, 4) nach irgendeinem der Ansprüche 1 bis 3 umfasst, und die Strukturteile im Verhältnis zu einer vertikalen Mittelebene, die durch eine Längsachse (V) des Fahrzeugs führt, symmetrisch angeordnet sind.

5. Panoramadach eines Kraftfahrzeugs, umfassend eine transparente Platte (1) im Bereich einer lichten Öffnungsfläche (11), und die auf einer Dachstruktur befestigt ist, die zwei seitliche Strukturteile (3, 4) nach Anspruch 1, ein Rollo (2) zum Abdecken des Bereichs der lichten Öffnungsfläche (11) der Platte (1) und zwei Schienen (5, 6) des Abdeckmoduls umfasst, durch die das Rollo in Längsrichtung zwischen einer offenen Position und einer geschlossenen Position geführt wird,
wobei jedes der beiden Strukturteile (3, 4) zumindest zwei Abschnitte aufweist, die sich über zwei unterschiedliche Niveaus erstrecken, wobei sich ein erster Abschnitt (31; 41) über ein oberes Niveau zur Befestigung der Platte (1) erstreckt, und sich ein zweiter Abschnitt (32; 42) über ein unteres Niveau zur Befestigung der Schienen (5, 6) des Abdeckmoduls erstreckt,
**dadurch gekennzeichnet, dass** der erste und der zweite Abschnitt (31, 32) jedes Strukturteils (3) von oben gesehen Seite an Seite auf einer ersten Länge (RA) des Strukturteils und zumindest in einer Teilüberdeckung auf einer zweiten Länge (RB) des Strukturteils angeordnet sind.

6. Panoramadach nach Anspruch 5, **dadurch gekennzeichnet, dass** der erste und der zweite Abschnitt (31, 32) Seite an Seite auf einer ersten Länge (RA) des Strukturteils beiderseits eines vorderen Abschnitts des Bereichs der lichten Öffnungsfläche (11), und zumindest in einer Teilüberdeckung auf einer zweiten Länge (RB) beiderseits eines hinteren Abschnitts des Bereichs der lichten Öffnungsfläche (11) angeordnet sind.

7. Panoramadach nach Anspruch 5 oder 6, **dadurch gekennzeichnet, dass** der zweite Abschnitt auf der zweiten Länge (RB) jedes Strukturteils ein Halteelement (34; 44) umfasst, das zur Befestigung des entsprechenden Abdeckmoduls (5, 6) zum Strukturteil hinzugefügt wird.

8. Panoramadach nach irgendeinem der Ansprüche 5 bis 7, **dadurch gekennzeichnet, dass** der erste Abschnitt (31; 41) jedes Strukturteils eine Auflagefläche zum Aufbringen einer Kleberwulst (14), zum Fixieren der transparenten Platte (1) umfasst, und dadurch, dass der zweite Abschnitt (32; 42) jedes Strukturteils geeignet ist, um eine Vorrichtung zur Befestigung (21) des entsprechenden Abdeckmoduls (5, 6) aufzunehmen.

9. Panoramadach nach irgendeinem der Ansprüche 5 bis 8, **dadurch gekennzeichnet, dass** die Platte (1) einen undurchsichtigen Abschnitt (12) umfasst, der den transparenten Bereich (11) umgibt und den Bereich der lichten Öffnungsfläche (L) der Platte (1) definiert, und die beiden Strukturteile (3, 4) und die beiden Schienen (5, 6) des Abdeckmoduls einen Abstand zueinander aufweisen, der gleich der lichten Öffnungsfläche (L) ist.

10. Kraftfahrzeug, **dadurch gekennzeichnet, dass** es ein Panoramadach nach irgendeinem der Ansprüche 5 bis 9 umfasst.

## Claims

1. Structural part for a roof of a vehicle in particular a motor vehicle, the part (3; 4) having at least two portions extending at different levels, i.e. a first portion (31; 41) extending at a higher level for the attachment of a transparent panel (1) in a clear opening area (11) and a second portion (32; 42) extending at a lower level for the attachment of a blackout module comprising a blind (2),
**characterised in that** the first and second portions (31, 41; 32, 42) are arranged, viewed from the top, side by side over a first length (RA) of the structural part (3, 4) and at least partially covered over a second length (RB) of the structural part.

2. Structural part according to claim 1, **characterised in that**, over a second length (RB) of the structural part (3, 4), the second portion comprises a support element (34; 44) added to the structural part for the attachment of the blackout module.

3. Structural part according to claim 1 or 2, **characterised in that** the first portion (31; 41) comprises a bearing surface for receiving a bead of adhesive (14) attaching the transparent panel (1) and **in that** the second portion (32; 42) is suited for receiving a means for attaching (21) the blackout module.

4. Roof structure for a motor vehicle having a roof, **characterised in that** it comprises two structural parts (3, 4) according to any of claims 1 to 3, with the structural parts being arranged symmetrically in relation to a vertical median plane passing through a longitudinal axis (V) of the vehicle.

5. Panoramic roof for a motor vehicle, comprising a transparent panel (1) in a clear opening area (11) and which is attached to a roof structure having two lateral structural parts (3, 4) according to claim 1, a blind (2) for blacking out the clear opening area (11) of the panel (1) and two rails (5, 6) of the blackout module which guide the blind longitudinally between an open position and a closed position,
each of the two structural parts (3, 4) having at least two portions extending at different levels, a first portion (31; 41) extending at a higher level for the attachment of the panel (1) and a second portion (32; 42) extending at a lower level for the attachment of the rails (5, 6) of the blackout module,
**characterised in that** the first and second portions (31, 32) of each structural part (3) are arranged, viewed from the top, side by side over a first length (RA) of the structural parts and at least partially covered over a second length (RB) of the structural part.

6. Panoramic roof according to claim 5, **characterised in that** the first and second portions (31, 32) are arranged side by side over a first length (RA) of the structural part on either side of a front portion of the clear opening area (11) and at least partially covered over a second length (RB) on either side of a rear portion of the clear opening area (11).

7. Panoramic roof according to claim 5 or 6, **characterised in that**, over a second length (RB) of each structural part, the second portion comprises a support element (34; 44) added to the structural part for the attachment of the corresponding blackout module (5, 6).

8. Panoramic roof according to any of claims 5 to 7, **characterised in that** the first portion (31; 41) of each structural part comprises a bearing surface for receiving a bead of adhesive (14) attaching the transparent panel (1) and **in that** the second portion (32; 42) of each structural part is suited for receiving a means for attaching (21) the corresponding blackout module (5, 6).

9. Panoramic roof according to any of claims 5 to 8, **characterised in that** the panel (1) comprises an opaque area (12) surrounding the transparent area (11) and defining the clear opening (L) of the panel (1), with the two structural parts (3, 4) and the two rails (5, 6) of the blackout module being spaced from each other by a distance equal to the clear opening (L).

10. Motor vehicle, **characterised in that** it comprises a panoramic roof according to any of claims 5 to 9.
